(19) Europäisches Patentamt
European Patent Office
Office européen des brevets

(11) Veröffentlichungsnummer: **0 212 553**
**B1**

# (12) EUROPÄISCHE PATENTSCHRIFT

(45) Veröffentlichungstag der Patentschrift: **14.11.90**

(51) Int. Cl.[5]: **C09B 44/02,** D21H 17/07, D21H 21/28

(21) Anmeldenummer: **86111155.7**

(22) Anmeldetag: **12.08.86**

## (54) Verfahren zum Färben von Papier.

(30) Priorität: **22.08.85 DE 3529968**

(43) Veröffentlichungstag der Anmeldung:
**04.03.87 Patentblatt 87/10**

(45) Bekanntmachung des Hinweises auf die Patenterteilung:
**14.11.90 Patentblatt 90/46**

(84) Benannte Vertragsstaaten:
**CH DE FR GB IT LI SE**

(56) Entgegenhaltungen:
**CH-A- 472 486**
**DE-B- 1 135 589**

**R.Raue, Rev. Prog. Coloration, vol. 14(1984) 187.**

(73) Patentinhaber: **BASF Aktiengesellschaft,**
**Carl-Bosch-Strasse 38, D-6700 Ludwigshafen(DE)**

(72) Erfinder: **Ruske, Manfred, Merziger Strasse 10,**
**D-6700 Ludwigshafen(DE)**
Erfinder: **Degen, Hans-Juergen, Dr., Schillerstrasse 6,**
**D-6143 Lorsch(DE)**

**EP 0 212 553 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Färben von Papier, das dadurch gekennzeichnet ist, daß man Verbindungen, die in Form der freien Säure, der allgemeinen Formel I

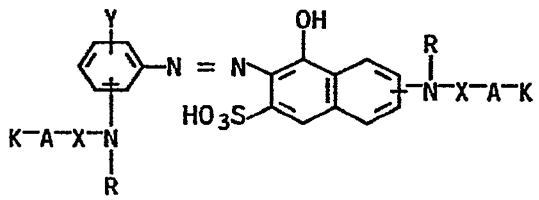

I

entspricht, verwendet, wobei jeweils unabhängig voneinander die Reste
A gegebenenfalls substituierte $C_1$- bis $C_6$-Alkylen- oder Vinylgruppen,
R Wasserstoff oder $C_1$- bis $C_4$-Alkyl,
X –CO–,
Y Wasserstoff, Chlor oder Brom und
K einen Rest der Formel

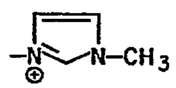 , 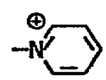 , 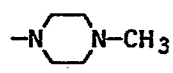 , 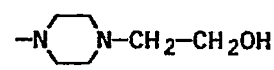 ,

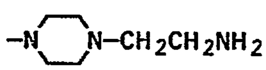 oder 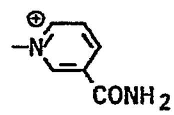

bedeuten.

Die Erfindung betrifft weiterhin ein Verfahren zum Färben von Papier, das dadurch gekennzeichnet ist, daß man einen Farbstoff der Formel

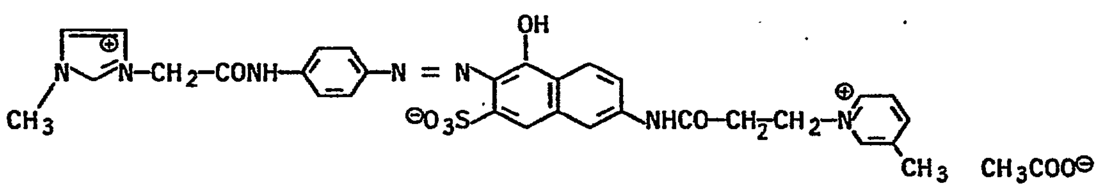

verwendet.

Dieser Farbstoff ist im Ausführungsbeispiel Nr. 7 beschrieben.

Wenn K eine kationische Gruppe ist, liegen die Azoverbindungen der Formel I in Form ihrer anorganischen oder organischen Salze vor.

Als Gegenionen kommen sowohl anorganische wie organische Anionen in Betracht, beispielsweise seien genannt: Methylsulfat-, Aminosulfat-, Benzolsulfonat-, Naphthalinsulfonat-, Oxalat-, Maleinat-, Formiat-, Acetat-, Hydroxyacetat-, Methoxyacetat-, Propionat-, Lactat-, Succinat-, Tartrat-, Methansulfonat- oder Benzoationen.

Bevorzugte Anionen sind z.B. das Formiat, Acetat, Hydroxyacetat, Methoxyacetat, Lactat, Aminosulfat oder Methansulfonat.

In den Azoverbindungen der Formel I können die Sulfonsäuregruppen mit einer der kationischen Gruppen K auch ein inneres Salz bilden.

Die Synthese der Farbstoffe der Formel I erfolgt nach den Angaben oder in Analogie zu den in der DE-PS 1 135 589 oder der DE-PS 1 266 898 beschriebenen Methoden.

Einzelheiten können auch den Beispielen entnommen werden, in denen sich Angaben über Teile und Prozente, sofern nicht anders vermerkt, auf das Gewicht beziehen.

Die Azoverbindungen der Formel I werden sowohl als Pulver- bzw. Granulat-Präparationen als auch in Form von konzentrierten Lösungen zum Einsatz gebracht. Pulver-Präparationen werden in üblicher Weise mit Stellmaterialien wie Natriumsulfat, -phosphat, -acetat in Gegenwart von Entstaubungsmitteln eingestellt, oder die Azoverbindungen werden direkt als Sprühtrocknungspräparationen in den Handel gebracht. Konzentrierte Farbstofflösungen können wäßriger oder wäßrig/organischer Art sein, wobei übliche und möglichst gut abbaubare Zusätze bevorzugt werden wie organische Säuren, vorzugsweise Essigsäure, Methoxyessigsäure, Methansulfonsäure, Ameisensäure, Milchsäure, Zitronensäure, Amide wie Formamid, Dimethylformamid, Harnstoff, Alkohole wie Glykol, Diglykol, Diglykoläther, vorzugsweise Methyl- oder Ethylether.

Erfindungsgemäß eignen sich die Azoverbindungen der Formel I vor allem als Farbstoffe zum Färben und Bedrucken von Papier nach den üblichen Methoden. Bevorzugt werden die Azoverbindungen zum Färben und Bedrucken von Papier, Halbkartons und Kartons in der Masse und zur Oberflächenfärbung verwendet.

Sie eignen sich für Papiere aller Arten, vor allem von gebleichtem, ungeleimtem ligninfreiem Papier, wobei von gebleichtem oder ungebleichtem Zellstoff ausgegangen werden kann und Laub- oder Nadelholz-Zellstoff, wie Birken- und/oder Kiefernsulfit- und/oder Sulfat-Zellstoff verwendet werden kann. Ganz besonders geeignet sind diese Verbindungen zum Färben von ungeleimtem Papier (z.B. Servietten, Tischdecken, hygienischen Papieren) als Folge ihrer hohen Affinität zu diesem Substrat.

Die neuen Azoverbindungen der Formel I ziehen auf diese Substrate gut auf, wobei die Abwasser nahezu farblos bleiben.

Die erhaltenen Färbungen zeichnen sich durch gute Allgemeinechtheiten aus, wie einer vergleichsweise guten Lichtechtheit bei gleichzeitig hoher Klarheit, Farbstärke und Naßechtheit, d.h., sie zeigen keine Neigung zum Ausbluten, wenn gefärbtes Papier in nassem Zustand mit feuchtem weißem Papier in Berührung gebracht wird. Darüber hinaus weisen sie eine gute Alaun-, Säure- und Alkali-Echtheit auf. Die Nuance der Färbungen wird durch Füllstoffe wie Kaolin und Talkum nicht verändert.

Die hohe Affinität für Papier und die große Ausziehgeschwindigkeit der neuen Farbstoffe ist für das Kontinue-Färben von Papier von großem Vorteil.

Die gefärbten Papiere sind hervorragend bleichbar, sowohl in der Chlorbleiche, als auch in der Hydrosulfitbleiche.

Von besonderer Bedeutung sind Verbindungen der Formel Ia

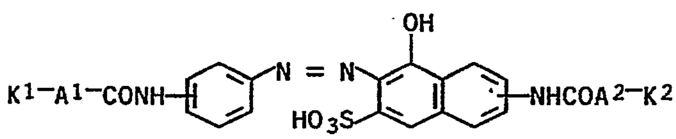

I a,

in der

$A^1$ und $A^2$ unabhängig voneinander $CH_2$ oder $C_2H_4$ sind und

$K^1$ und $K^2$ die für K angegebene Bedeutung haben.

Die Erfindung betrifft weiterhin als neue Stoffe Verbindungen der Formel I, in denen mindestens einer der Reste K ein Nicotinsäureamidrest ist.

In der DE-B 1 135 589 sind einige der im erfindungsgemäßen Verfahren zur Anwendung kommenden Farbstoffe beschrieben. Ein Hinweis auf ihre Tauglichkeit zum Färben von Papier findet sich hierbei jedoch nicht.

Auch Rev. Prog. Coloration, Vol. 14, (1984) Seiten 187 bis 203, wo eine Übersicht über kationische Farbstoffe gegeben wird, und die CH-A 472 486, wo erwähnt ist, daß die dort beschriebenen basischen Farbstoffe sich u.a. zum Färben von Cellulose eignen und sich dabei durch gute Naßechtheiten auszeichnen, konnten das erfindungsgemäße Verfahren nicht nahelegen.

Beispiel 1

In einem Holländer werden 70 Teile chemisch gebleichte Sulfitcellulose (aus Nadelholz) und 30 Teile chemisch gebleichte Sulfitcellulose (aus Birkenholz) in 2000 Teilen Wasser gemahlen.

In diese Masse streut man 0,2 Teile des Farbstoffs der Formel:

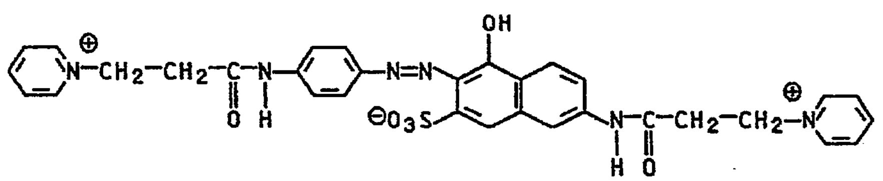

$CH_3COO^{\ominus}$

Nach 20 Minuten Mischzeit wird aus dieser Masse Papier hergestellt. Das auf diese Weise erhaltene saugfähige Papier ist scharlachrot gefärbt. Das Abwasser ist praktisch farblos. Das Papier ist sehr gut bleichbar. Die Lichtechtheiten und Ausblutechtheiten sind gut.

Gleich gute Ergebnisse werden erhalten, wenn der Farbstoff durch einen Farbstoff der folgenden Tabelle ersetzt wird.

Formel Ia

| | 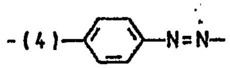 | 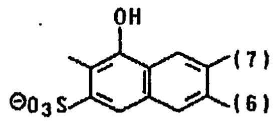 | $A^1$ | $A^2$ | $K^1$ | $K^2$ | Farbton |
|---|---|---|---|---|---|---|---|
| 2 | 4 | 6 | $-CH_2-CH_2-$ | $-CH_2-CH_2-$ | 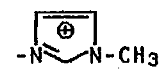 | 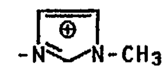 | rot |
| 3 | 4 | 6 | $CH_2-CH_2-$ | $-CH_2-CH_2-$ | 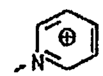 | 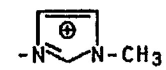 | rot |
| 4 | 4 | 4 | $-CH_2-CH_2-$ | $-CH_2-CH_2-$ | 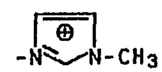 | 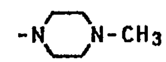 | rot |
| 5 | 4 | 6 | $-CH_2-CH_2-$ | $-CH_2-CH_2-$ | 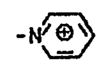 | 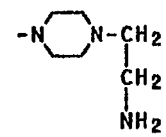 | rot |
| 6 | 4 | 6 | $-CH_2-CH_2-$ | $-CH_2-$ | 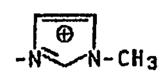 | 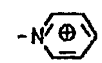 | rot |

Formel Ia

| | 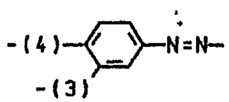 | 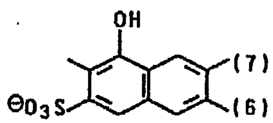 | $A^1$ | $A^2$ | $K^1$ | $K^2$ | Farbton |
|---|---|---|---|---|---|---|---|
| 7 | 4 | 6 | $-CH_2-$ | $-CH_2-CH_2-$ | 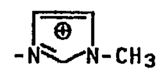 | 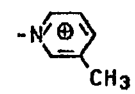 | rot |
| 8 | 3 | 6 | $-CH_2-CH_2-$ | $-CH_2-CH_2-$ | 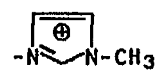 | 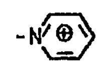 | orange |
| 9 | 4 | 7 | $-CH_2-CH_2-$ | $-CH_2-CH_2-$ | 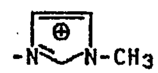 | 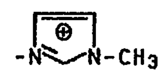 | blau-stichig rot |
| 10 | 4 | 7 | $-CH_2-CH_2-$ | $-CH_2-CH_2-$ | 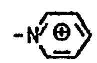 | 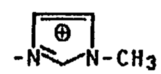 | blau-stichig rot |

Beispiel 11

25 kg Katalogpapier (Ausschuß), 60 kg gebleichter Holzschliff (65° Schopper Riegler) und 15 kg ungebleichter Sulfitzellstoff werden im Pulper in 2500 l Wasser aufgeschlagen. Der 4%igen wäßrigen Stoffsuspension werden 0,5% lösliche Stärke, 16% Kaolin und 2% Talkum (berechnet auf trockene Faser) zugegeben. Anschließend wird die Stoffsuspension am Refiner auf 45°C Schopper Riegler ausgemahlen. Der Stoffsuspension werden 12 kg einer 10%igen, essigsauren Lösung des Farbstoffs der Formel

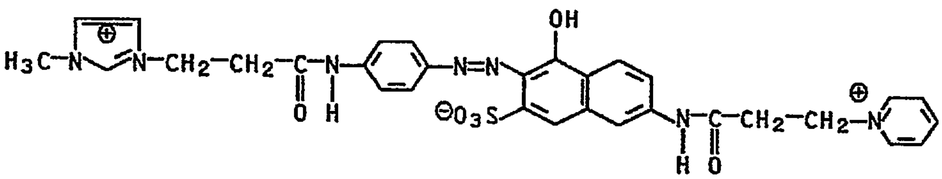

$CH_3COO^{\ominus}$

zugesetzt, (= 1% trockener Rotfarbstoff bezogen atro Faser). Nach 15 Minuten Ziehzeit wird dem Stoff Harzleim-Dispersion (Menge: 0,6% trocken, bezogen auf Faser) zugesetzt. Nach 10 Minuten wird der aus der Mischbütte abfließende Stoff kontinuierlich mit Wasser auf 0,8% Stoffgehalt verdünnt und kontinuierlich mit Alaun $[Al_2(SO_4)_3 \cdot 18\ H_2O]$ auf pH 4,5 gestellt (gemessen im Siebwasser) und in den Stoffauflauf gepumpt. Man erhält gelbstichig rotes Katalogpapier (60 g/m²) mit guter Wasser- und Lichtechtheit. Die Fabrikationsabfälle sind gut chlorbleichbar.

Werden anstelle des Farbstoffs die Farbstoffe der folgenden Tabelle verwendet, dann erhält man rotes bis orange gefärbtes Papier mit guten Echtheiten und guter Chlorbleichbarkeit.

Formel Ia

| | 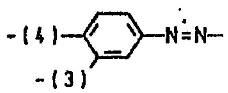 | 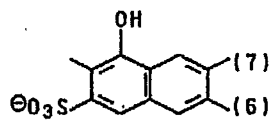 | $A^1$ | $A^2$ | $K^1$ | $K^2$ | Farbton |
|---|---|---|---|---|---|---|---|
| 12 | 4 | 6 | $-CH_2-$ | $-CH_2-$ | 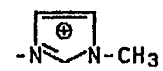 | 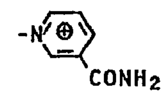 | rot |
| 13 | 4 | 6 | $-CH_2-CH_2-$ | $-CH_2-CH_2-$ | 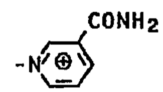 | 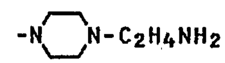 | rot |
| 14 | 4 | 6 | $-CH_2-CH_2-$ | $-CH_2-$ | 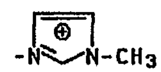 | 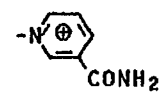 | rot |
| 15 | 4 | 6 | $-CH_2-$ | $-CH_2-CH_2-$ | 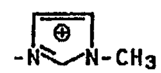 | 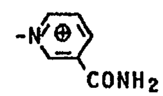 | rot |
| 16 | 4 | 6 | $-CH_2-$ | $-CH_2-$ | 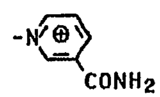 | 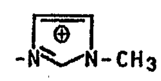 | rot |

Formel Ia

| | 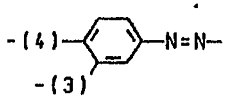 | 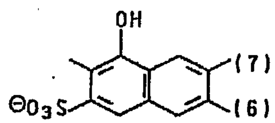 | A¹ | A² | K¹ | K² | Farbton |
|---|---|---|---|---|---|---|---|
| 17 | 4 | 6 | $-CH_2-CH_2$ | $-CH_2-CH_2$ | 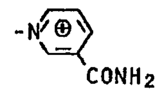 | 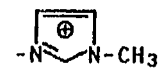 | rot |
| 18 | 4 | 6 | $-CH_2-$ | $-CH_2-CH_2-$ | 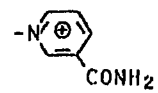 | 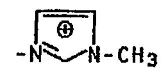 | rot |
| 19 | 4 | 6 | $-CH_2-CH_2-$ | $-CH_2-CH_2-$ | 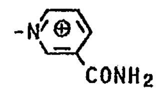 | 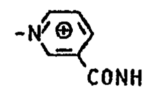 | rot |
| 20 | 4 | 6 | $-CH_2-CH_2-$ | $-CH_2-CH_2-$ | 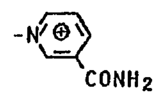 | 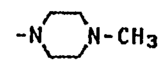 | rot |
| 21 | 4 | 6 | $-CH_2-CH_2-$ | $-CH_2-$ | 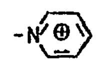 | 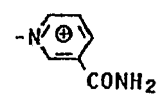 | rot |

Beispiel 22

15 kg Altpapier (holzhaltig), 25 kg gebleichter Holzschliff und 10 kg ungebleichter Sulfatzellstoff werden im Pulper zu einer 3%igen wäßrigen Stoffsuspension aufgeschlagen. Die Stoffsuspension wird in einer Färbebütte auf 2% verdünnt. Dieser Suspension werden dann – gerechnet auf trockene Gesamtfaser – nacheinander unter Rühren 0,5% lösliche, oxidativ abgebaute Maisstärke, 5% Kaolin und 1,25 kg einer 5%igen essigsauren Lösung des Farbstoffs der Formel

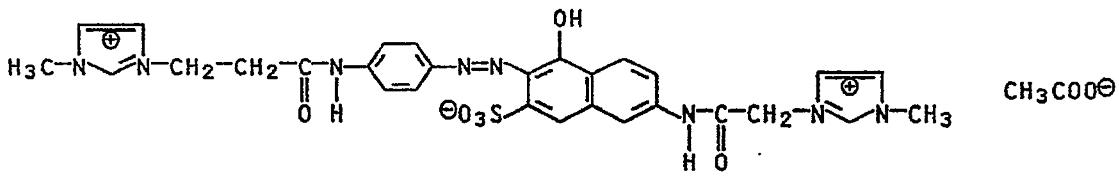

zugegeben. Nach 20 Minuten wird der Stoff in der Mischbütte mit 1% (bezogen auf atro Faser) einer Harzleim-Dispersion versetzt. Die homogene Stoffsuspension wird auf der Papiermaschine kurz vor dem Stoffauflauf, mit Alaun auf pH 5 eingestellt.

Auf der Papiermaschine wird ein 80 g/m² schweres Tütenpapier maschinenglatt hergestellt, welches eine Rotnuance mit guten Ausblutechtheiten nach DIN 53 991 und gute Lichtechtheiten aufweist.

Beispiel 23

Eine 10%ige Lösung des Farbstoffs

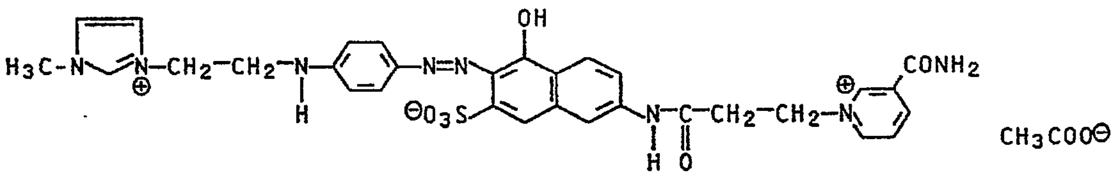

in Wasser wird mit einem Gummiwischer auf eine Tiefdruckplatte 95 × 150 mm aufgetragen. Auf die Tiefdruckplatte wird ein gebleichtes Tissuepapier gelegt, mit einem saugfähigen Papier abgedeckt und mit einer Stahlwalze von 20 kg abgerollt. Das mit einem roten Druckmuster versehene Tissuepapier wird getrocknet.

Der Druck hat gute Wasser- und Lichtechtheit.

## Patentansprüche

1. Verfahren zum Färben von Papier, dadurch gekennzeichnet, daß man Verbindungen, die in Form der freien Säure der allgemeinen Formel I

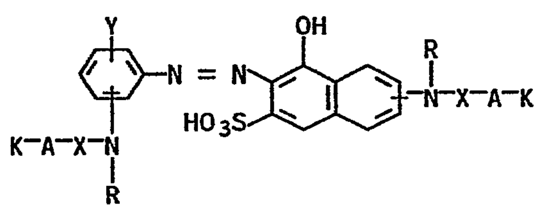

(I)

entsprechen, verwendet, wobei jeweils unabhängig voneinander die Reste
A gegebenenfalls substituierte $C_1$- bis $C_6$-Alkylen- oder Vinylengruppen,
R Wasserstoff oder $C_1$- bis $C_4$-Alkyl,
X –CO–,
Y Wasserstoff, Chlor oder Brom und
K einen Rest der Formel

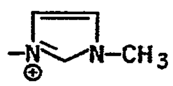 , 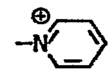 , 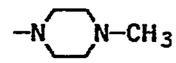 , 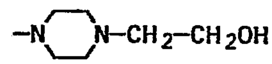 ,

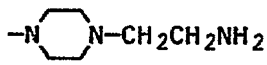 oder 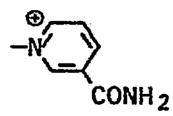

bedeuten.

2. Verfahren gemäß Anspruch 1, dadurch gekennzeichnet, daß man Verbindungen der Formel Ia

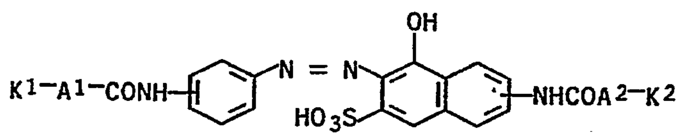 (Ia)

verwendet, in der
$A^1$ und $A^2$ unabhängig voneinander $CH_2$ oder $C_2H_4$ sind und
$K^1$ und $K^2$ die für K angegebene Bedeutung haben.

3. Verfahren zum Färben von Papier, dadurch gekennzeichnet, daß man einen Farbstoff der Formel

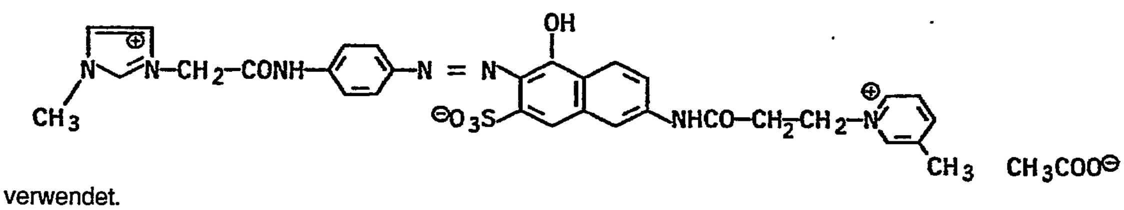

verwendet.

4. Verbindungen der Formel gemäß Anspruch 1, bei denen mindestens einer der Reste K ein Nicotinsäureamidrest ist.

## Claims

1. A process for coloring paper, wherein a compound which, in the form of a free acid, is of the general formula I

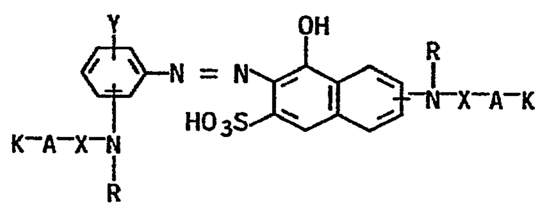 (I)

where, in each case independently of one another, the radicals
A are each unsubstituted or substituted $C_1$–$C_6$-alkylene or vinylene, the radicals
R are each hydrogen or $C_1$–$C_4$-alkyl, the radicals
X are each –CO–,
Y is hydrogen, chlorine or bromine, and
K is a radical of the formula

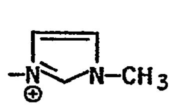 , 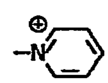 , 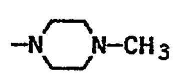 , 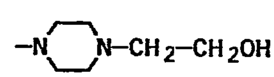 ,

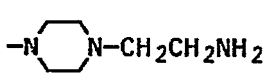 or 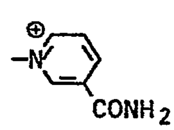

is used.

2. A process as claimed in claim 1, wherein a compound of the formula Ia

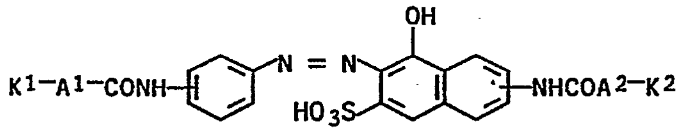 (Ia)

where
$A^1$ and $A^2$ independently of one another are each $CH_2$ or $C_2H_4$ and
$K^1$ and $K^2$ have the meanings stated for K, is used.

3. A process for coloring paper, wherein a dye of the formula

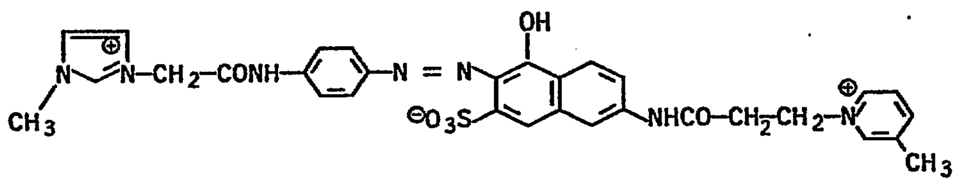 $CH_3COO^{\ominus}$

is used.

4. A compound of the formula as claimed in claim 1, wherein one or both of the radicals K are nicotinamide radicals.

**Revendications**

1. Procédé de coloration de papier, caractérisé en ce qu'on utilise des composés qui ont, sous forme de l'acide libre, la formule générale I

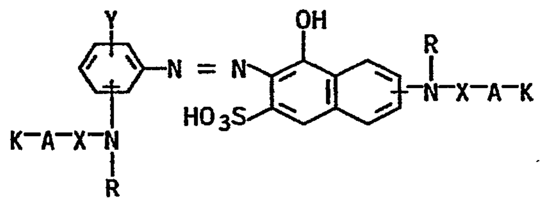 (I)

dans laquelle les restes représentent indépendamment les uns des autres
A: des groupements alkylène en $C_1$–$C_6$ ou vinylène éventuellement substitués,
R: des atomes d'hydrogène ou des groupements alkyle en $C_1$–$C_4$,
X: des groupements –CO–,
Y: des atomes d'hydrogène, de chlore ou de brome et
K: des restes de formule

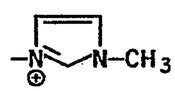 , 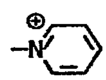 , 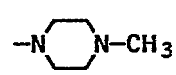 , 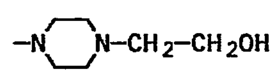 ,

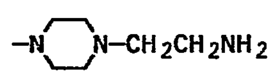 ou 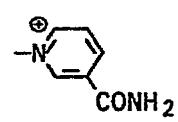

2. Procédé selon la revendication 1, caractérisé en ce qu'on utilise des composés de formule Ia

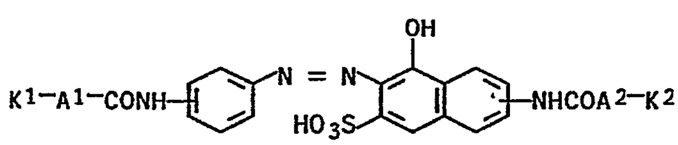 (Ia)

dans laquelle
$A^1$ et $A^2$ sont indépendamment l'un de l'autre des groupements $CH_2$ ou $C_2H_4$ et
$K^1$ et $K^2$ ont les significations données pour K.

3. Procédé de coloration de papier, caractérisé en ce qu'on utilise un colorant de formule

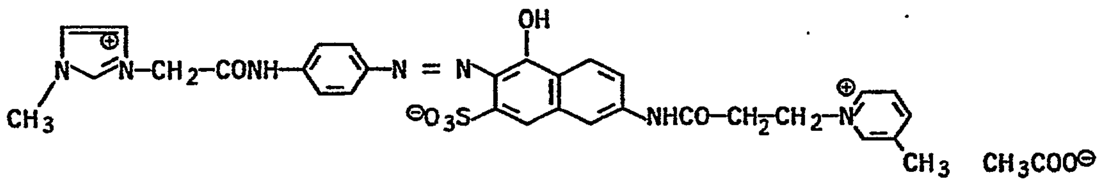

4. Composés de formule définie dans la revendication 1, dans lesquels au moins un des restes K est un reste nicotinamide.